**Europäisches Patentamt**

**European Patent Office**

**Office européen des brevets**

(19)

(11) Publication number : **0 480 076 B1**

## (12) EUROPEAN PATENT SPECIFICATION

(45) Date of publication of patent specification :
**02.02.94 Bulletin 94/05**

(51) Int. Cl.[5] : **G01N 27/406**

(21) Application number : **90117603.2**

(22) Date of filing : **13.09.90**

(54) **Method and sensor for measuring oxygen partial pressure.**

The file contains technical information submitted after the application was filed and not included in this specification

(43) Date of publication of application :
**15.04.92 Bulletin 92/16**

(45) Publication of the grant of the patent :
**02.02.94 Bulletin 94/05**

(84) Designated Contracting States :
**DE FR GB IT NL**

(56) References cited :
**EP-A- 0 189 038**
**DE-A- 3 127 472**
**DE-A- 3 417 170**
**DE-A- 3 517 252**
**DE-U- 8 815 370**
**GB-A- 2 054 868**
**PATENT ABSTRACTS OF JAPAN, vol. 10, no. 165 (P-467)[2221], 12th June 1986; & JP-A-61 18 856**

(73) Proprietor : **HONEYWELL B.V.**
**Laarderhoogtweg 18-20**
**NL-1101 EA Amsterdam (NL)**

(72) Inventor : **Aagard, Roger L.**
**5388 Fairlawn Shores Tr.**
**Prior Lake, MN 55372 (US)**
Inventor : **Bonne, Ulrich**
**4936 Shay Oak Road**
**Hopkins, MN 55343 (US)**
Inventor : **Cole, Barret E.**
**3010 West 112th Street**
**Bloomington, MN 55431 (US)**
Inventor : **Schuldt, Spencer B.**
**8830 Normandale Blvd.**
**Bloomington, MN 55437 (US)**
Inventor : **Ule, Edward R.**
**200 E. Dana Street**
**Mountain View, CA 94041 (US)**

(74) Representative : **Rentzsch, Heinz, Dipl.-Ing. et al**
**Honeywell Holding AG Patent- und Lizenzabteilung Kaiserleistrasse 39 Postfach 10 08 65**
**D-63008 Offenbach (DE)**

## Description

The invention relates to measuring the oxygen partial pressure in a single ambient atmosphere.

Prior art oxygen microsensors utilizing an oxygen ion conducting solid electrolyte require either providing and pumping a cavity which involves slow time constants, measuring resistance-dependent values which tend to be drifty, provision of reference gas chambers, observation of metal-metal oxide redox reactions, or complex electronic circuitry. Prior art Nernstian oxygen sensors also require that the electrodes be maintained in a constant temperature environment to avoid false signals generated by thermocouple-like operation.

GB-A-2 054 868 discloses potentiometric oxygen sensors with an oxygen ion conducting solid electrolyte with a pair of independent sensor electrodes, which contact said solide electrolyte and which are made of two different metals having different catalytic activity. A heating element is provided for heating said electrolyte and said sensor electrodes to an operating temperature. The reference electrode is exposed to atmospheric oxygen, alternatively both electrodes could be exposed to the gas to be measured. The use of temperature sensors on one side of a carrier, on the other side of which the solid electrolyte is applied, is suggested. The determination of the oxygen partial pressure is based upon the voltage across the electrodes.

Existing thin film oxygen sensors having bridge or diaphragm connections to a substrate thermally expand and tend to severly deform at elevated temperatures, thus often resulting in fractures.

It is an object of the present invention to provide a new method and a solid-state oxygen microsensor for reliable and accurate measurement of the oxygen partial pressure in ambient atmosphere which sensor has a simplified configuration; is batch processible; and has low energy requirements. The microsensor having a thin film structural configuration should allow for bending for deflection, due to thermal expansion forces, into an unconstrained space. The sensor should not require providing or pumping a cavity, reference gas chambers, measurement of resistance-dependent values, observation of metal-metal oxide redox processes, or relatively complex electronics.

These objects are achieved by the new method according to claim 1 and by the new sensor configuration as described in claim 6. Improvements and further details are characterized in the dependent claims.

The new solid-state oxygen microsensor is useful in applications such as combustion systems to maintain and improve combustion efficiency levels. The solid-state oxygen microsensor of the present invention measures the potential difference (EMF) generated by two electrodes deposited on a solid oxygen ion conducting electrolyte and located in a temperature gradient in the same ambient atmosphere. The invention further discloses thin film structural configurations which allow thermal expansion forces to bend or deflect the film into an unconstrained space.

The Nernstian potential of the prior art types of solid-state oxygen microsensors is generated by the difference in chemical potential at two electrodes in a constant temperature environment due to differences in the composition of the ambient atmospheres at the electrodes, as follows:

$E_1 = RT_1/(nF)\ln(a_1)$; and

$E_2 = RT_2/(nF)\ln(a_2)$

where

$R = $ 8,3144 J/(K mole);

$T_1, T_2 = $ temperature at each electrode;

$n = $ 4, the charge transfer number for oxygen;

$F = $ 96.500 Farad, the charge of one mole of monovalent ions; and

$a_1, a_2 = $ chemical activity of oxygen at each of the electrodes, which, in practice, represents the oxygen partial pressure.

A measurable, non-zero EMF $= E_1 - E_2$ arises when the chemical activity, or the partial pressure of oxygen, at the two electrodes located in different ambient atmospheres is unequal. A direct relation between the two partial pressures may be obtained when the temperature is constant according to the following equation:

$$EMF = RT/(nF)\ln(p_1/p_2). \quad (1)$$

According to the invention, both electrodes are located in the same composition ambient atmosphere having the same oxygen partial pressure, while a temperature gradient is established across the electrodes. A measurable, non-zero EMF output generated according to the present invention has the following relation:

$$EMF/T = A + R/F(1/2\ln x_v + 5/8\ln T + 1/4\ln p) + Q/(2RT) + E_1, \quad (2)$$

whereat

$A = -(0,715^{+}0,018)$mV deg. K

$R = 8,3144$ J/(K mole)

$F = 96.500$ coulomb

$x_v = $ mole fraction of free vacancies not combined into complexes

$T = $ Temperature

EP 0 480 076 B1

p = oxygen partial pressure in atmospheres

Q =heat of transport of oxygen ions in the oxide

$E_1$ =    EMF of wire contacts to ceramic.

Further details of derivation and use of the above relations may be found in Volchenkov, Z.S. and N.F. Sizintseva, "The Thermoelectric Force in $ZrO_2$-$Sc_2O_3$, $ZrO_2$-CaO and $ZrO_2$-$Y_2O_3$ Solid Electrolytes", Soc. Electrochem (USA) 13#9, 1190 (1977), (transl. from Electrochimya 13, 1390 (1977); Fadeev, G.I. and M.V. Perfilev, "Thermo-EMF of Cells with a $ZrO_2$ + $Y_2O_3$ Electrolyte in Atmospheres of Different Compositions", Soc. Electrochem (USA) 18#7, 894 (1982), (transl. from Electrochimya 18, 1004 (1982)); and Chebotin, V.N., S.L. Fridman and S.F. Pal'quer, Electrokhimiya 6, 1300 (1970); and V.N. Chebotic, M.V. Perfilev, "The Electrochemistry of Solid Electrolytes", Khimiya, Moscow (1978) (in Russian). Because the electrodes are provided in the same composition ambient atmosphere and measurement of a reference gas is unnecessary, the oxygen microsensor apparatus of the present invention may embody a simplified solid-state thin film layered design.

By applying equation (2) twice, once for a first temperature T1 and second for a second temperature T2, too voltages $EMF_1$ and $EMF_2$ can be measured. A voltage difference $\Delta E$ then can be computed, with

$$- \Delta E = EMF_2 - EMF_1; \text{ which means} \quad (3)$$

$$- \Delta E = f(p, \Delta T, T_2), \text{ for example} \quad (4).$$

$$- \Delta E = 0,0217 \Delta T \ln p + 0,453 \Delta T + 1,408 \times 10^{-13} T_2^4 + \quad (5)$$

Although the term in $T_2$ shows a power of 4, its influence on $\Delta E$ is only 3% of the influence of $\Delta T$.

The solid-state oxygen microsensor of the present invention comprises an oxygen-ion conducting solid electrolyte; a pair of sensor electrodes located in the same ambient atmosphere and contacting the electrolyte; a heater for heating the microsensor assembly to suitable operating temperatures and for providing a temperature gradient across the electrodes; and means for measuring the EMF output generated during operation of the sensor. The temperature difference between the two electrodes is measured by a thermocouple composed of two junctions, one at each of the electrodes. The absolute temperature at the electrodes is unimportant, as long as the temperature is within the preferred operating range to provide high oxygen-ion conductivity at the solid electrolyte, and a measurable temperature gradient is maintained across the electrodes. While the sensor impedance changes with absolute temperature, the sensor output does not change with absolute temperature, provided that the measuring device impedance is 30 to 100 times greater. Changes in absolute temperature at each of the electrodes do not influence the output signal, as long as the temperature difference is maintained constant. Similarly, the electrode geometry does not influence the output provided that a constant temperature difference is maintained. Since the electrodes are provided in the same ambient atmosphere, the solid-state oxygen microsensor of the present invention may be further simplified in that the electrodes may be deposited on the same surface of the solid electrolyte, leaving the opposite electrolyte surface free for deposition of a heater.

BRIEF DESCRIPTION OF THE DRAWINGS

Further features of the invention will be apparent from the following more detailed description taken in conjunction with the drawings, wherein:

Fig. 1    illustrates the relationship between the oxygen pressure P, the sensor output - $\Delta E$ and the temperature gradient $\Delta T$ generated across the electrodes during operation of the oxygen microsensor using a particular temperature sensor in the form of a $ZrO_2$-$Y_2O_3$/Pt thermocouple at an absolute temperature of $T_2 = 700°C$;

Fig. 2    shows the same relationship at an absolute temperature of $T_2 = 800°C$;

Fig. 3    shows the relation between the oxygen pressure p and the output voltage/temperature gradient quotient - $\Delta E/\Delta T$ and the temperature gradient at an absolute temperature - $T_2 = 700°C$;

Fig. 4    shows the same relationship at an absolute temperature $T_2 = 800°C$;

Fig. 5    shows a cross-sectional view through an embodiment of a solid-state oxygen microsensor according to the present invention;

Fig. 6    shows a schematic representation of a measuring circuit of the solid-state oxygen microsensor;

Fig. 7    shows an enlarged top view of the solid-state oxygen microsensor utilizing one preferred electrode geometry;

Figs. 8A-8F    show preferred heater configurations for use in the solid-state oxygen microsensor;

Figs. 9 - 11    show enlarged top views of the solid-state oxygen microsensor utilizing different embodiments of a generally V-shaped thin film structural configuration;

3

Fig. 12    shows an enlarged top view of another solid-state oxygen microsensor, with the heater and electrode elements exposed for purposes of drawing clarity, utilizing a generally A-shaped thin film structural configuration according to a further embodiment of this invention; and

Fig. 12A    shows an enlarged cross section, including the support film and solid electrolyte, along line 12A-12A as shown in Fig. 12.

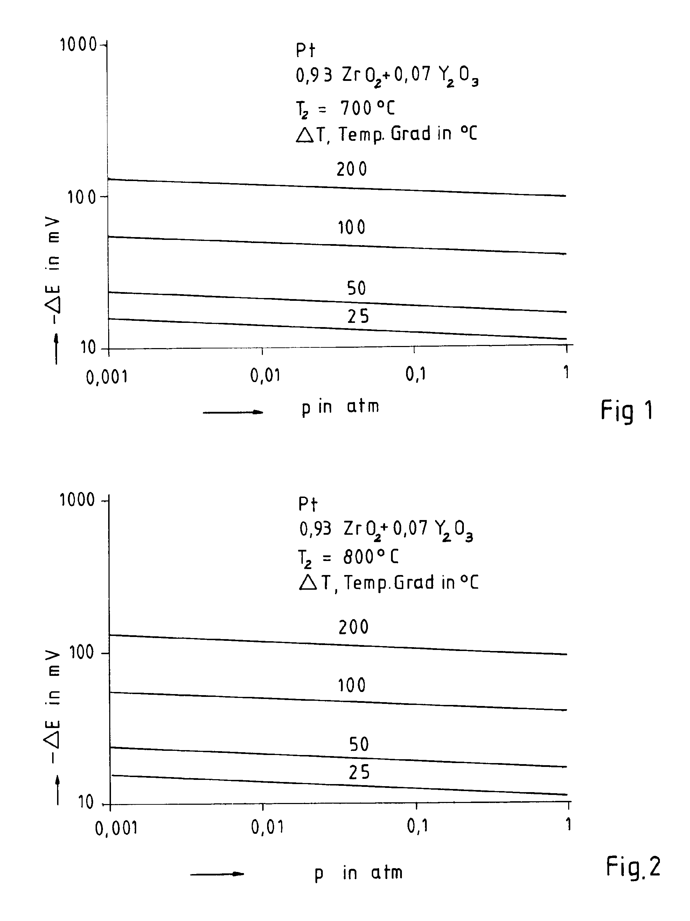

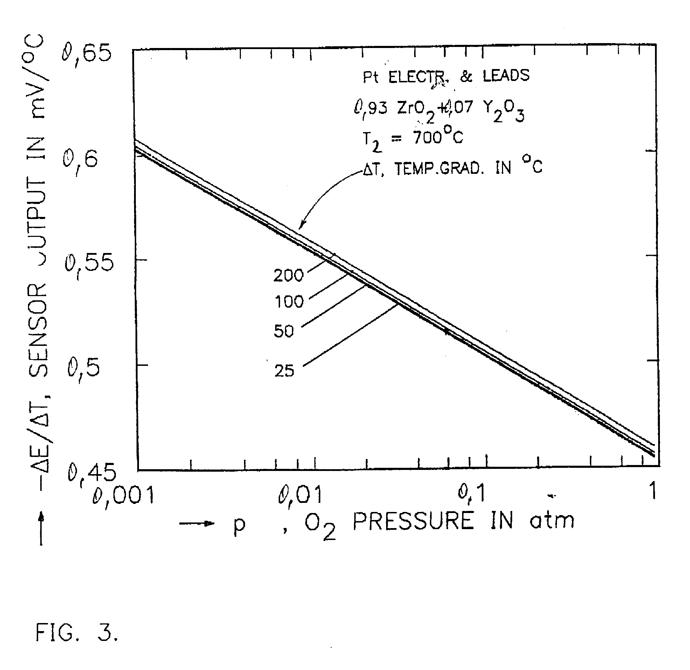

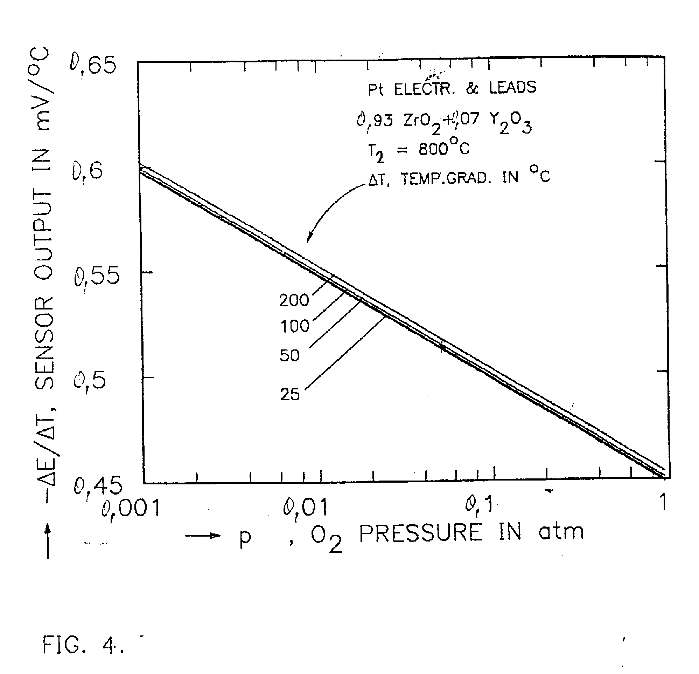

Equation (2) represents the EMF at any Pt-metal oxide interface. By applying the above equation twice, once for $T=T_1$ and a second time for $T=T_2$, and then computing the difference $-\Delta E = EMF_2 - EMF_1$ the curves as plotted in figures 1 and 2 were obtained. These results can also be plotted in terms of $-\Delta E/\Delta T$, as shown in Figures 3 and 4. Both sets of plots show the very little influence of a change in $T_2$ from 700 to 800°C. Analytically, a more practical version of the above equation is one obtained by linear regression of the computed and plotted data, explicitly showing the influence of the gradient $\Delta T = T_2 - T_1$:

$$- \Delta E = f(p, \Delta T, T_2). \quad (4)$$

for example,

$$- \Delta E = 0{,}0217\, \Delta T \ln p + 0{,}453\, \Delta T + 1{,}4085 \times 10^{-13} T_2{}^4 + \quad (5)$$

represents the curves of Figures 1 and 2 to within ±0.7%. More complex versions of equation (4) have achieved accuracies to within ±0,06%.

Although the TERM in $T_2$ shows a power of 4, its influence on $\Delta E$ is only 3% of the influence of $\Delta T$.

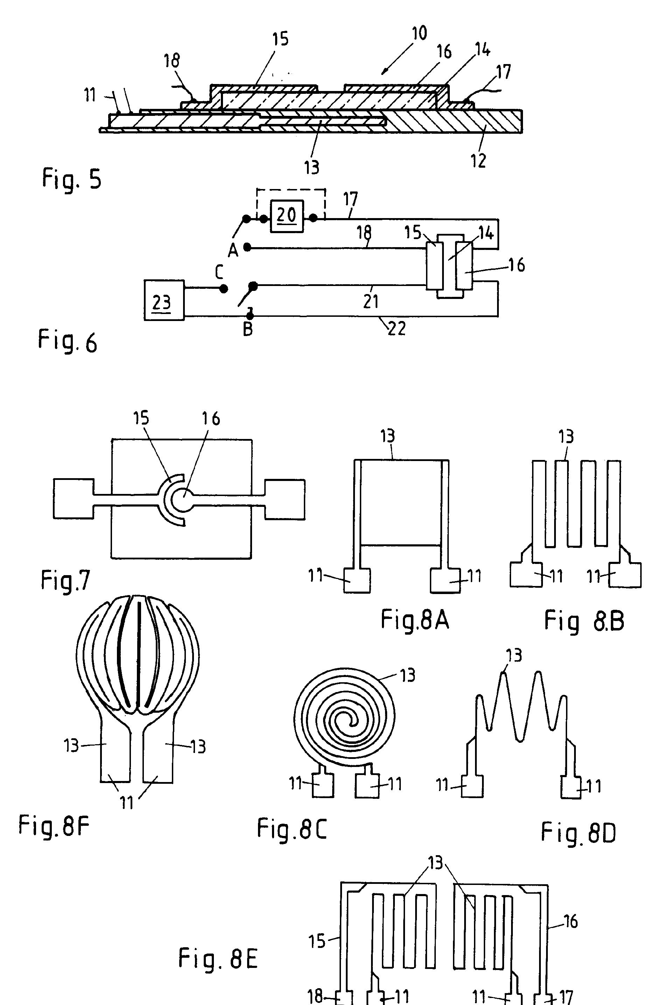

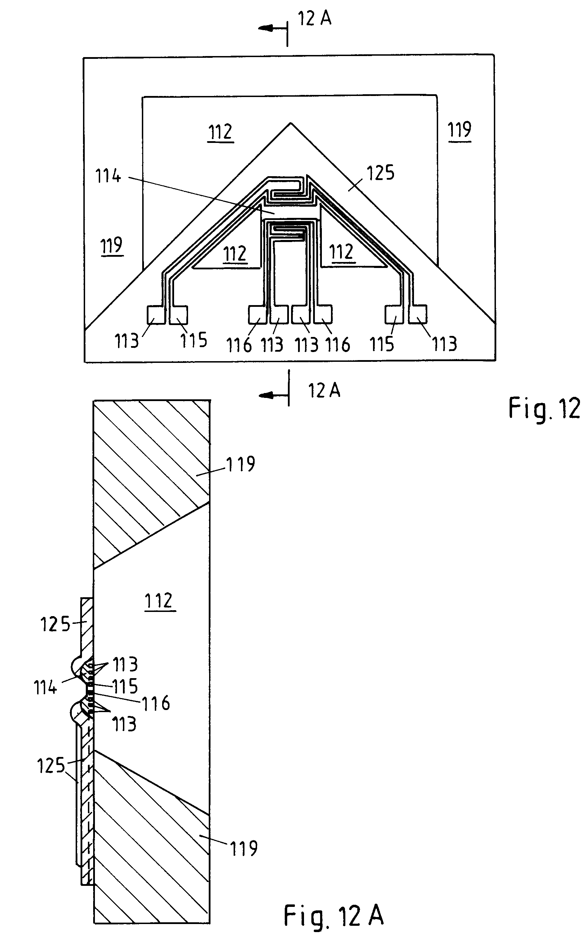

The solid-state oxygen microsensor of the present invention preferably comprises a layered structure, as shown schematically in Fig. 5. Solid-state oxygen microsensor 10 comprises oxygen ion conducting solid electrolyte 14 with at least two spaced electrodes 15 and 16 in contact therewith, and heater 13 capable of providing high operating temperatures on the order of about 300 - 900°C and configured to provide a measurable temperature gradient across electrodes 15 and 16. Electrodes 15 and 16 are spaced apart from one another and are connected by leads 18 and 17, respectively, to an external temperature measuring circuit. Heater 13 is energized at terminals 11 from an external circuit and may be mounted or embedded in a dielectric layer 12 to provide additional support for the microsensor, to insulate the heater from interaction with electrodes 15 and 16, and/or to provide better adhesion of the heater 13 to the oxygen ion conducting solid electrolyte 14. Oxygen microsensor 10 may also form a bridge structure spanning a depression in a support structure such as a silicon chip (see Fig. 12A).

Electrodes 15 and 16 preferably comprise platinum, palladium, rhodium, iridium or other metals or metallic alloys having a high melting temperature and capable of catalyzing the dissociation and ionization of oxygen. Electrodes 15 and 16 preferably comprise thin membranes which may be deposited on solid electrolyte 14 by means known to the art, such as ion beam sputtering techniques. Many different electrode configurations may be used in the oxygen microsensor of the present invention, but the configurations shown in Figures 6 and 7 are preferred. Fig. 6 shows electrodes 15 and 16 having a substantially rectangular or linear configuration. Fig. 7 shows a preferred radial configuration for electrodes 15 and 16, wherein electrode 16 has a circular shape, while electrode 15 has a concentric semi-circular shape surrounding a portion of the circular electrode 16. Electrode 16 is the "hotter" electrode and electrode 15 is the "cooler" electrode during microsensor operation according to this embodiment.

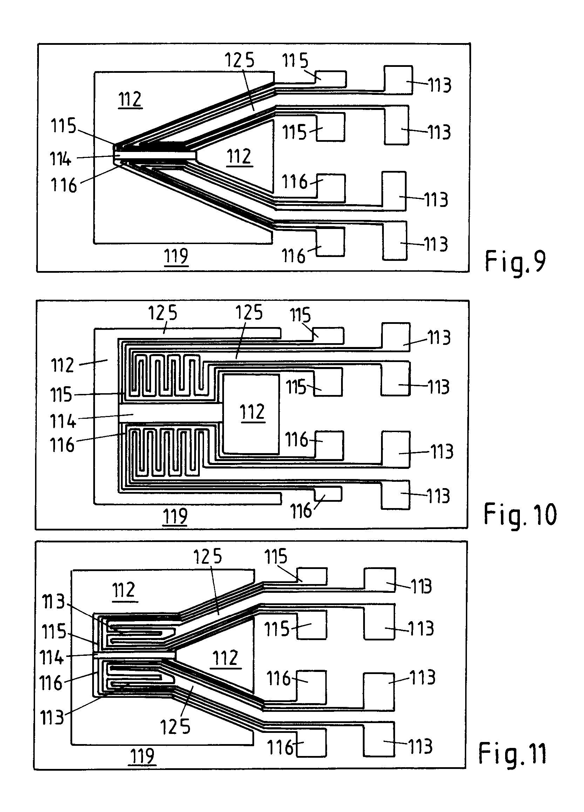

Fig. 9 shows a top view of a thin film oxygen sensor according to one embodiment of this invention. Dielectric film 125 is connected to only one side of an etch pit 112. Dielectric film 125 generally has a "V"-shaped structure which forms a cantilever extending over the etch pit. Dielectric film 125 is etched from beneath by a method such as anisotropic etching (see EP-A 0 169 519) or the like. Electrodes 115 and 116 are deposited and patterned to contact the edges of dielectric film 125 for measuring the temperature and oxygen potential on each side of solid electrolyte 114. Heaters 113 are located on either side of solid electrolyte 114 and are supplied with current to maintain a desired temperature which is sensed by the change in resistance of either the heaters 113 or the electrodes 115, 116. Alternatively, for all designs electrodes 115 and 116 can be omitted and the heaters 113 located on the solid electrolyte 114 can act both as heaters when power is applied to them and as electrodes when signals are read from them.

Thin film oxygen sensors having a silicon nitride bridge or diaphragm connection to a silicon substrate can severely deform due to thermal expansion which often results in fracture at elevated temperatures. The "V"-shaped structure uses a cantilever arrangement from one side of the edge pit to relieve thermal expansion stresses. The "V"-shape also facilitates the anisotropic etch under dielectric film 125 and provides support for solid electrolyte 114 which expands in the same direction when solid electrolyte 114 is heated. Such pattern also provides greater space for heaters 113 than conventional designs. Fig. 10 shows another embodiment according to this invention of a "V"-shaped structure having serpentine configured heaters 113. Fig. 11 shows yet another embodiment according to this invention of a "V"-shaped structure. In Figs. 9 - 11, solid electrolyte 114 is located between the legs of the "V" so that connections to only one side of the etch pit are needed. Such connection permits dielectric film 125 to expand in the same direction when solid electrolyte 114 is heated.

EP 0 480 076 B1

Fig. 12 shows a thin film oxygen sensor according to another embodiment of this invention which forms an "A"-frame structure. Both Figs. 12 and 12A show solid electrolyte 114 and dielectric film 125. The "A"-frame structure allows for relief of thermal stresses by directing the thermal expansions in the same direction into an unconstrained space. Dielectric film 125 is extended on both sides of the sensor from one edge of the etch pit and thus permits all thermal expansion except the differential expansion to lie in the same direction thus reducing the stress on solid electrolyte 114.

Fig. 12A shows an enlarged cross section along line 12A-12A as shown in Fig. 12. Solid electrolyte 114 overlays heaters 113 and electrodes 115 and 116. Dielectric film 125 preferably covers heaters 113 as shown in Fig. 12A. Dielectric film 125 supports heaters 113, solid electrolyte 114, and electrodes 115 and 116 over the etch pit 112. Dielectric film 125 preferably comprises $Al_2O_3$, $SiO_2$, $Si_3N_4$, MgO or like suitable high temperature insulating materials.

Referring again to Fig. 6, electrodes 15 and 16, and leads 21 and 22 are intended to make possible temperature differential measurements and oxygen concentration measurements. Leads 18 and 17 preferably comprise Pt/10%Rh, palladium or rhodium, or alloys thereof, and therefor together with electrodes 15, 16 constitute two thermocouple junctions. Switch A is only closed during a temperature measurement. In this case both thermocouple junctions 15/18 and 16/17 are connected in series to high impedance voltmeter or processor 20. Switch A is open during oxygen measurement, so that in this case only the platinum leads 21 and 22 are connected to and interrogate the sensor electrodes 15, 16 and deliver a voltage signal dependent on the oxygen partial pressure p. Leads 21 and 22 are connected to a high impedance voltmeter 23 to measure the potentials provided by the sensor. When switch A is closed, the high temperature thermocouple junctions formed with electrode 15 and lead 18, and that with electrode 16 and lead 17, indicate the temperature differentials of about 20 to about 200°C of the sensor at absolute operating temperatures of about 300 to about 900°C.

Oxygen ion conducting solid electrolyte 14 contacting electrodes 15 and 16 may comprise any oxygen ion conducting material such as $ZrO_2$, $CeO_2$, $Bi_2O_3$, and other metal oxides having similar properties, such as suitably doped calcia, yttria, to achieve crystallographic stability and preferred conductivity levels at the microsensor operating temperatures. Suitable electrolyte materials are well known to the art, and yttria stabilized zirconia (YSZ) is an especially preferred solid electrolyte. Oxygen ion conducting solid electrolyte 14 preferably comprises a thin membrane which may be applied to the substrate material by techniques which are known to the art, such as ion beam sputtering.

Heater film 13 is provided in close proximity to oxygen ion conducting solid electrolyte 14 and electrodes 15 and 16, and preferably is deposited on the opposing surface of solid electrolyte 14 from the electrodes. Preferred heater configurations are shown in Figs. 8A-8F, but many other heater configurations which are known to the art would be suitable for use in this invention. Heater film 13 is energized at terminals 11 from an external circuit to provide suitable operating temperatures at heater film 13. It preferably comprises Pt, SiC, $SnO_2$, and other materials having similar thermal properties. Heater film 13 may be provided as a continuous, uniform film as shown in Fig. 8A; in a rectangular serpentine configuration as shown in Fig. 8B; in a roled serpentine heater configuration as shown in Fig. 8C; in a circular serpentine configuration as shown in Fig. 8D; as two separated serpentine heater units as shown in Fig. 8E, or in a generally circular wider serpentine configuration as shown in Fig. 8F. The temperature gradient across the electrodes may be generated by means of two separated heaters energized to provide different absolute temperatures and thereby establish a temperature gradient, or adjustment of the electrode placement and configuration with respect to heater film 13 may provide the requisite temperature gradient.

Heater film 13 is preferably mounted or embedded in dielectric film 12, which preferably comprises aluminum oxide or silicon nitride. The heater 13 can be part of electrodes 15 and 16, as shown in Fig. 8E. Heater film 13 may be embedded in a single dielectric layer, as shown in Fig. 5, or it may be sandwiched between two thin dielectric film layers 12. Dielectric film 12 provides support for the solid electrolyte layer and insulates the heater from interaction with the sensing electrodes, thus extending its operating lifetime.

Operation of the solid-state oxygen microsensor according to the process of the present invention will be described with reference to Fig. 6. Heater film 13 is initially energized to raise the temperature of the microsensor to suitable operating ranges and to establish a temperature gradient across electrodes 15 and 16. When contact is made at switch A, electrical contact is established between electrodes 15 and 16 and a temperature differential measurement device 20. Leads 21 and 22 are simultaneously closed by making contact at point B, and the temperature differential between electrodes 15 and 16 may be measured by the thermocouple composed of two junctions 15/18 and 16/17, one at each of the electrodes. The measured voltage corresponding to the temperature differential between electrodes 15 and 16 is used for controlling the heat current flowing through heater 13 such that a constant temperature difference $\Delta T$ is maintained. Processor 23 may be used for temperature control.

By subsequently opening contact A and closing contact C, output from electrodes 15 and 16 is conveyed to processor or high impedance voltmeter 23, which measures the EMF and, based upon the measurement of EMF and temperature differential across electrodes 15 and 16, processor or high impedance voltmeter 23 is used to determine the partial pressure of oxygen in the ambient atmosphere by correlating the output voltage $\Delta E$ of the sensor electrodes 15, 16 to an oxygen partial pressure p reading according to the relationship shown in Figs. 1 to 4. These relationships can be part of the scale factor of high impedance voltmeter 23 or are stored in a memory associated with processor 23.

Figs. 1 and 2 show the relationship between the sensor output $\Delta E$, the temperature differential $\Delta T$, and the partial pressure p of oxygen in th ambient atmosphere, based upon experimental data relating to thermoelectric potentials published by Fadeev et al, "Thermo-EMF of Cells with a $ZrO_2 + Y_2O_3$ Electrolyte in Atmospheres of Different Compositions", Soc. Electrochem (USA), Vol. 18, No. 7, p. 894 (1982).

Measuring the voltage corrsponding to the temperature difference between electrodes 15 and 16 and measuring the differential voltage $\Delta E = f(p)$ can be accomplished by the same high impedance voltage meter 23 therewith omitting a second instrument 20 and having lead 17 directly connected to the upper contact of switch A. If switches A and C are closed, processor 23 measures the voltage difference generated by thermocouples 15/18 and 16/17. If switch A is open and switch C is closed, processor 23 measures the differential voltage between electrodes 15, 16 which depends on the oxygen partial pressure as described in equation (4).

The configuration of the oxygen microsensor of the present invention has been described generally above without reference to specific or relative dimensions. Preferred dimensions depend, of course, upon the specific application and components. In general, however, solid electrolyte 14 may be from about 200 to about 1000 $\mu m$ square, preferably from about 400-800 $\mu m$ square, and has a thickness of about 0.2 to about 20 $\mu m$, preferably about 0.4 to about 2 $\mu m$. Electrodes 15 and 16, according to the embodiments shown in Fig. 7, have an interelectrode spacing of about 20 to 100 $\mu m$, preferably about 40 to about 80 $\mu m$, and have a thickness of about 500 to about 3000Å, preferably about 750 to about 1500Å. The dimensions of heater 13 correspond generally to the dimensions of solid electrolyte 14, with heater 13 having a surface area representing about 50 to about 100 percent the surface area of solid electrolyte 14, and a thickness of about 500 to about 3000Å. As shown in the embodiments of Figs. 9 to 12, opposing sides or ends of solid electrolyte 114 are in contact with or secured to etch pit 112.

While in the foregoing specification this invention has been described in relation to certain preferred embodiments thereof, any many details have been set forth for purpose of illustration, it will be apparent to those skilled in the art that the invention is susceptible to additional embodiments and that certain of the details described herein can be varied considerably without departing from the scope of the invention as defined in the claims.

## Claims

1. A method for measuring oxygen partial pressure in a single ambient atmosphere, comprising the steps of:

   a) contacting an oxygen ion conducting solid electrolyte (14) with two independent sensor electrodes (15, 16) and exposing said independent sensor electrodes to said single ambient atmosphere;

   b) generating a temperature gradient across said independent sensor electrodes such that one electrode is at a higher temperature ($T_2$) than the other electrode ($T_1$);

   c) measuring the temperature difference ($T_2-T_1$) between the two electrodes and controlling the temperature gradient for maintaining said temperature difference ($T_2-T_1$) at a constant value ($\Delta T$);

   d) measuring an output voltage ($\Delta E$) across said independent sensor electrodes;

   e) determining the oxygen partial pressure p based upon said constant value ($\Delta T$) of said temperature difference ($T_2-T_1$) and said measured output voltage ($\Delta E$).

2. The method of claim 1, **characterized in that** the oxygen partial pressure p in said single ambient atmosphere is determined based upon a relationship:

   $$EMF/T = A + R/F(1/2\ln x_v + 5/8\ln T + 1/4\ln p) + Q/(2RT) + E_1,$$

   by applying this equation twice, once for a first temperature $T_1$ and second for a second temperature $T_2$ and then computing the voltage difference

   $$- \Delta E = EMF_2 - EMF_1;$$

   whereat

   A = $-(0,715^+0,018)$mV deg. K

   R = 8,3411 J/(K mole)

F = 96.500 coulomb

$x_v$ = mole fraction of free vacancies not combined into complexes

T = Temperature

p = oxygen partial pressure

Q = heat of transport of oxygen ions in the oxide

$E_1$ = EMF of wire contacts to ceramic

EMF = output voltage.

3. The method of claim 1 or 2, **characterized by**:

a) storing in a memory curves in the form

$$\Delta E/(T_2 - T_1) = f(p);$$

b) maintaining the temperature gradient $(T_2 - T_1)$ constant; and

c) comparing in a microprocessor the measured voltage difference $\Delta E$ with said stored curves for determining the oxygen partial pressure p.

4. The method of claim 1, 2 or 3, **characterized in that** said electrolyte and said independent sensor electrodes are heated to about 300° to about 900°C.

5. The method of one of the claims 1 to 4, **characterized in that** said temperature gradient is about 20° to 200°C.

6. A solid-state oxygen microsensor comprising:

a) an oxygen ion conducting solid electrolyte (14);

b) a pair of independent sensor electrodes (15, 16) for being exposed to a single ambient atmosphere, said independent sensor electrodes contacting said solid electrolyte;

c) heater means (13) for heating-said electrolyte (14) and said sensor electrodes (15, 16) to an operating temperature and for generating a temperature gradient across said independent sensor electrodes such that one electrode is at a higher temperature $(T_2)$ than the other electrode $(T_1)$;

d) temperature measuring means (20, 23) in communication with said independent sensor electrodes (15, 16) for measuring said temperature difference $(T_2-T_1)$;

e) temperature gradient control means for maintaining said temperature difference $(T_2-T_1)$ at a constant value $(\Delta T)$;

f) voltage measuring means (23) in communication with said independent sensor electrodes for measuring the output voltage $(\Delta E)$ across said electrodes; and

g) processor means (23) in communication with said temperature measuring means and said voltage measuring means for determining an oxygen partial pressure (p) in said single ambient atmosphere based upon the measured temperature difference $(T_2-T_i)$ and the measured output voltage $(\Delta E)$.

7. The sensor according to claim 6, **characterized in that** the heater means (13) is adapted for maintaining said electrolyte and said independent sensor electrodes (15, 16) at an absolute operating temperature of about 300° to about 900°C.

8. The sensor according to Claim 6, **characterized in that** said independent sensor electrodes (15, 16) have an overall rectangular shape, are approximately parallel to one another, and are spaced about 10 to about 100 $\mu$m preferably from about 40 to about 80 $\mu$m from one another.

9. The sensor according to claim 6, **characterized in that** a first electrode (16) of said independent sensor electrodes (15, 16) has a circular shape and a second electrode (15) of said independent sensor electrodes has a semi-circular arc shape surrounding a portion of said first electrode at a distance of about 20 to about 100 $\mu$m from said first electrode.

10. The sensor according to claim 9, **characterized in that** said first electrode (16) is maintained at a higher temperature than said second electrode.

11. The sensor according to one of the claims 6 to 10, **characterized in that** each said independent sensor electrode is about 500 to 3000Å, preferably about 750 to 1500Å thick, and is selected from the group consisting of platinum, palladium, rhodium, and iridium.

12. The sensor according to one of the claims 5 to 11, **characterized in that** said electrolyte is about 200 to

about 1000 square $\mu m$, preferably from 400 to about 800 square $\mu m$; said electrolyte is about 0.2 to about 20 $\mu m$, preferably from about 0.4 to 2.0 $\mu m$, thick; and said electrolyte is selected from the group consisting of $ZrO_2$, $CeO_2$, $Bi_2O_3$ and other metal oxides doped with at least one of calcia and yttria.

13. The sensor according to claim 6, **characterized in that** said temperature measuring means comprises a high impedance voltmeter (20, 23).

14. The sensor according to one of the claims 6 to 13, **characterized in that** said electrolyte (114) is secured on one side to an etch pit (112) and said electrolyte forms a cantilever (125) which extends over said etch pit.

15. The sensor according to claim 14, **characterized in that** said electrodes (115, 116), said electrolyte (114) and said heater (113) generally form a "V"-shaped structure.

16. The sensor according to one of the claims 6 to 13, **characterized in that** two opposing sides of said electrolyte are secured on two opposing sides to an etch pit.

17. The sensor according to claim 16, **characterized in that** said electrodes (115, 116), said electrolyte (114) and said heater (113) generally form an "A"-frame structure.

18. The sensor according to one of the claims 6 to 17, **characterized by** a dielectric film (12) attached to said electrodes (15, 16) for insulating said sensor electrodes from said heater means (13).

19. The sensor according to one of the claims 6 to 18, **characterized in that** said heater means (13) performs a dual function of heating when power is applied to said heater means and sensing a voltage representing an electrochemical cell output signal when signals are read from said heater means.

20. The sensor of claim 19, **characterized in that** the heater means (13) constitutes at least part of said electrodes (15, 16).


**Patentansprüche**

1. Verfahren zum Messen des Sauerstoffpartialdrucks in einer einzelnen Umgebungsatmosphäre mit folgenden Schritten:
   a) ein Sauerstoffionen leitender Trockenelektrolyt (14) wird mit zwei unabhängigen Fühlerelektroden (15, 16) kontaktiert, und die unabhängigen Fühlerelektroden werden der einzelnen Umgebungsatmosphäre ausgesetzt;
   b) zwischen den unabhängigen Fühlerelektroden wird ein Temperaturgradient erzeugt, derart, daß die eine Elektrode sich auf einer höheren Temperatur ($T_2$) befindet als die andere Elektrode ($T_1$);
   c) die Temperaturdifferenz ($T_2 - T_1$) zwischen den beiden Elektroden wird gemessen, und der Temperaturgradient wird gesteuert, um die Temperaturdifferenz ($T_2 - T_1$) auf einem konstanten Wert ($\Delta T$) zu halten;
   d) die Ausgangsspannung ($\Delta E$) an den beiden unabhängigen Fühlerelektroden wird gemessen;
   e) der Sauerstoffpartialdruck (p) wird bestimmt basierend auf dem konstanten Wert ($\Delta T$) der Temperaturdifferenz ($T_2 - T_1$) und der gemessenen Ausgangsspannung ($\Delta E$) .

2. Verfahren nach Anspruch 1, **dadurch gekennzeichnet**, daß der Sauerstoffpartialdruck (p) in der einzelnen Umgebungsatmosphäre nach folgender Beziehung bestimmt wird:
$$EMF/T = A + R/F(1/2 \ln x_v + 5/8 \ln T + 1/4 \ln p) + Q/(2RT) + E_1,$$
indem diese Gleichung zweimal angewandt wird, einmal für eine erste Temperatur T1 und ein zweites Mal für eine zweite Temperatur T2 und dann die Spannungsdifferenz berechnet wird gemäß
$$- \Delta E = EMF_2 - EMF_1;$$
wobei

| | | |
|---|---|---|
| A | = | -(0.715$^+$0.081)mV Grad Kelvin |
| R | = | 8.3411 J/(K Mol) |
| F | = | 96.500 Coulomb |
| $x_v$ | = | Molfraktion der nicht in Komplexen gebundenen freien Wertigkeiten |
| T | = | Temperatur |

p   =   Sauerstoffpartialdruck in Atmosphären

Q   =   Wärmeübertragung der Sauerstoffionen im Oxyd

$E_1$   =   EMF der Drahtkontakte an Keramik.

3. Verfahren nach Anspruch 1 oder 2, **gekennzeichnet durch**

a) Speichern von Kurven der Form

$$\Delta E/(T_2 - T_1) = f(p)$$

in einem Speicher;

b) Konstanthalten des Temperaturgradienten $(T_2 - T_1)$; und

c) Vergleichen der gemessenen Spannungsdifferenz mit den gespeicherten Kurven in einem Mikroprozessor, um den Sauerstoffpartialdruck p zu bestimmen.

4. Verfahren nach Anspruch 1, 2 oder 3, **dadurch gekennzeichnet**, daß der Elektrolyt und die unabhängigen Fühlerelektroden auf eine Temperatur von etwa 300° bis etwa 900°C aufgeheizt werden.

5. Verfahren nach einem der Ansprüche 1 bis 4, **dadurch gekennzeichnet**, daß der Temperaturgradient etwa 20° bis 200°C beträgt.

6. Festkörper-Sauerstoff-Mikrofühler mit

a) einem Sauerstoffionen leitenden Feststoffelektrolyten (14);

b) zwei unabhängigen einer einzelnen Umgebungsatmosphäre auszusetzenden Fühlerelektroden (15, 16), welche mit dem Feststoffelektrolyten in Kontakt sind;

c) einer Heizvorrichtung zum Aufheizen des Elektrolyten (14) und der Fühlerelektroden (15, 16) auf eine Betriebstemperatur und zur Erzeugung eines Temperaturgradienten zwischen den unabhängigen Fühlerelektroden derart, daß eine Elektrode auf einer höheren Temperatur $(T_2)$ liegt als die andere Elektrode $(T_1)$;

d) einer mit den unabhängigen Fühlerelektroden (15, 16) zusammenwirkende Temperaturmeßeinrichtung (20, 23) zur Messung der Temperaturdifferenz $(T_2 - T_1)$;

e) einer Steuereinrichtung für den Temperaturgradienten zum Halten der Temperaturdifferenz $(T_2 - T_1)$ auf einem konstanten Wert $\Delta T$;

f) einer mit den unabhängigen Sensorelektroden zusammenwirkenden Spannungsmeßeinrichtung (23) zum Messen der Ausgangsspannung $(\Delta E)$ zwischen den Elektroden; und

g) einem mit der Temperaturmeßeinrichtung und der Spannungsmeßeinrichtung im Signalaustausch stehenden Prozessor (23) zum Bestimmen des Sauerstoffpartialdrucks (p) in der einzelnen Umgebungsatmosphäre basierend auf der gemessenen Temperaturdifferenz $(T_2 - T_1)$ und der gemessenen Ausgangsspannung $\Delta E$.

7. Fühler nach Anspruch 6, **dadurch gekennzeichnet**, daß die Heizvorrichtung (13) den Elektrolyten und die unabhängigen Fühlerelektroden (15, 16) auf einer absoluten Betriebstemperatur von etwa 300° bis etwa 900°C hält.

8. Fühler nach Anspruch 6, **dadurch gekennzeichnet**, daß die unabhängigen Fühlerelektroden (15, 16) eine insgesamt rechteckförmige Gestalt haben, etwa parallel zueinander angeordnet sind und zwischen sich einen Abstand von etwa 10 bis 100 µm, vorzugsweise zwischen ungefähr 40 bis 80 µm aufweisen.

9. Fühler nach Anspruch 6, **dadurch gekennzeichnet**, daß die erste Elektrode (16) der unabhängigen Fühlerelektroden (15, 16) kreisförmig gestaltet ist und eine zweite Elektrode (15) der unabhängigen Fühlerelektroden die Gestalt eines halbkreisförmigen Bogens hat, welcher einen Teil der ersten Fühlerelektrode im Abstand von etwa 20 bis etwa 100 µm von der ersten Fühlerelektrode umgibt.

10. Fühler nach Anspruch 9, **dadurch gekennzeichnet**, daß die erste Elektrode (16) auf einer höheren Temperatur gehalten wird als die zweite Elektrode.

11. Fühler nach einem der Ansprüche 6 bis 10, **dadurch gekennzeichnet**, daß jede der unabhängigen Fühlerelektroden etwa 500 bis 3000Å, vorzugsweise etwa 750 bis 1500Å dick ist und aus einem der Werkstoffe Platin, Palladium, Rhodium und Iridium ausgewählt ist.

12. Fühler nach einem der Ansprüche 5 bis 11, **dadurch gekennzeichnet**, daß der Elektrolyt eine Ausdehnung von etwa 200 bis 1000µm², vorzugsweise zwischen 400 und etwa 800µm² hat, etwa 0,2 bis 20µm, vorzugsweise zwischen 0,4 bis 2µm dick ist und aus der Gruppe von Werkstoffen mit $ZrO_2$, $CeO_2$, $Bi_2O_3$ und anderen Metalloxyden ausgewählt ist, die mit wenigstens einem der Stoffe Kalzium und Yttrium dotiert sind.

13. Fühler nach Anspruch 6, **dadurch gekennzeichnet**, daß die Temperaturmeßeinrichtung ein hochohmiges Voltmeter (20, 23) aufweist.

14. Fühler nach einem der Ansprüche 6 bis 13, **dadurch gekennzeichnet**, daß der Elektrolyt (114) auf der einen Seite eines Ätztroges (112) befestigt ist und einen Ausleger (125) bildet, welcher sich über den Ätztrog erstreckt.

15. Fühler nach Anspruch 14, **dadurch gekennzeichnet**, daß die Elektroden (115, 116), der Elektrolyt (114) und der Heizer (113) eine im wesentlichen V-förmige Struktur haben.

16. Fühler nach einem der Ansprüche 6 bis 13, **dadurch gekennzeichnet**, daß zwei gegenüberliegende Seiten des Elektrolyten an zwei einander gegenüberliegenden Seiten des Ätztroges befestigt sind.

17. Fühler nach Anspruch 16, **dadurch gekennzeichnet**, daß die Elektroden (115, 116) der Elektrolyt (114) und der Heizer (113) eine im wesentlichen A-förmige Struktur haben.

18. Fühler nach einem der Ansprüche 6 bis 17, **gekennzeichnet durch** einen an den Elektroden (15, 16) angebrachten dielektrischen Film (12) zum Isolieren der Fühlerelektroden von der Heizeinrichtung (13).

19. Fühler nach einem der Ansprüche 6 bis 18, **dadurch gekennzeichnet**, daß die Heizeinrichtung (13) eine Doppelfunktion hat, nämlich Heizen, solange Strom der Heizvorrichtung zugeführt wird, sowie Messen einer Spannung entsprechend dem Ausgangssignal einer elektrochemischen Zelle, sobald Signale von der Heizeinrichtung abgegriffen werden.

20. Fühler nach Anspruch 19, **dadurch gekennzeichnet**, daß die Heizeinrichtung (13) zumindest einen Teil der Elektroden (15, 16) bildet.

**Revendications**

1. Procédé de mesure de la pression partielle d'oxygène dans une atmosphère ambiante unique, comprenant les stades suivants :

   a) on met en contact un électrolyte solide conducteur des ions d'oxygène (14) avec deux électrodes de détection indépendantes (15, 16) et on expose lesdites électrodes de détection indépendantes à ladite atmosphère ambiante unique,

   b) on génère un gradient de température aux bornes desdites électrodes de détection indépendantes en sorte qu'une électrode soit à une température ($T_2$) plus élevée que celle de l'autre électrode ($T_1$),

   c) on mesure la différence de température ($T_2-T_1$) entre les deux électrodes et on règle le gradient de température pour maintenir ladite différence de température ($T_2-T_1$) a une valeur constante ($\Delta T$),

   d) on mesure la tension de sortie ($\Delta E$) aux bornes desdites électrodes de détection indépendantes, et

   e) on détermine la pression partielle d'oxygène p sur la base de ladite valeur constante ($\Delta T$) de ladite différence de température ($T_2-T_1$) et de ladite tension de sortie mesurée ($\Delta E$).

2. Procédé selon la revendication 1, caractérisé en ce que la pression partielle d'oxygène p dans ladite atmosphère ambiante unique est déterminée sur la base de la relation suivante :

$$EMF/T = A + R/F(1/2\ln x_v + 5/8\ln T + 1/4\ln p) + Q/(2RT) + E_1$$

en appliquant cette équation à deux reprises, une fois pour une première température $T_1$ et une seconde fois pour une seconde température $T_2$ et en calculant la différence de tension comme suit :

$$- \Delta E = EMF_2 - EMF_1,$$

où

A  = - (0,715 - 0,018)mV deg. K
   = 8,3411 J/(K moles)
F  = 96,500 coulombs
$x_v$  = fraction molaire de lacunes libres non combinées dans des complexes
T  = température

P        = pression partielle d'oxygène
Q       = chaleur de transport des ions d'oxygène dans l'oxyde
$E_1$      = tension de sortie des fils de contact métalliques avec la céramique
EMF    = tension de sortie

3. Procédé selon la revendication 1 ou 2, caractérisé en ce que :
   a) on stocke dans une mémoire des courbes de forme suivante :
$$\Delta E/(T_2 - T_1) = f(p)$$
   b) on maintient le gradient de température $(T_2-T_1)$ constant, et
   c) on compare dans un microprocesseur la différence de tension mesurée $\Delta E$ auxdites courbes stockées pour déterminer la pression partielle d'oxygène p.

4. Procédé selon la revendication 1, 2 ou 3, caractérisé en ce que ledit électrolyte et lesdites électrodes de détection indépendantes sont chauffés à une température d'environ 300 à environ 900°C.

5. Procédé selon l'une quelconque des revendications 1 à 4, caractérisé en ce que ledit gradient de température est d'environ 20 à 200°C.

6. Microcapteur d'oxygène à semi-conducteur comprenant :
   a) un électrolyte solide (14) conducteur des ions d'oxygène,
   b) une paire d'électrodes de détection indépendantes (15, 16) susceptibles d'être exposées à une atmosphère ambiante unique, lesdites électrodes de détection indépendantes venant en contact avec ledit électrolyte solide,
   c) des moyens de chauffage (13) pour chauffer ledit électrolyte (14) et lesdites électrodes de détection indépendantes (15, 16) à une température opérationnelle et pour générer un gradient de température aux bornes desdites électrodes de détection indépendantes en sorte qu'une électrode soit à une température $(T_2)$ supérieure à celle de l'autre électrode $(T_1)$,
   d) des moyens de mesure de la température (20, 23) en communication avec lesdites électrodes de détection indépendantes (15, 16) pour mesurer ladite différence de température $(T_2-T_1)$,
   e) des moyens de réglage du gradient de température pour maintenir ladite différence de température $(T_2-T_1)$ à une valeur constante $(\Delta T)$,
   f) des moyens de mesure de la tension (23) en communication avec lesdites électrodes de détection indépendantes pour mesurer la tension de sortie $(\Delta E)$ aux bornes desdites électrodes, et
   g) des moyens de traitement (23) en communication avec lesdits moyens de mesure de la température et avec lesdits moyens de mesure de la tension pour déterminer une pression partielle d'oxygène (p) dans ladite atmosphère ambiante unique sur la base de la différence de température $(T_2-T_1)$ mesurée et de la tension de sortie $(\Delta E)$ mesurée.

7. Capteur selon la revendication 6, caractérisé en ce que les moyens de chauffage (13) sont à même de maintenir ledit électrolyte et lesdites électrodes de détection indépendantes (15, 16) à une température opérationnelle absolue d'environ 300 à environ 900°C.

8. Capteur selon la revendication 6, caractérisé en ce que lesdites électrodes de détection indépendantes (15, 16) ont une forme globale rectangulaire, sont approximativement parallèles et sont espacées d'environ 10 à environ 100 micromètres, de préférence d'environ 40 à environ 80 micromètres l'une de l'autre.

9. Capteur selon la revendication 6, caractérisé en ce qu'une première électrode (16) desdites électrodes de détection indépendantes (15, 16) a une forme circulaire tandis que la seconde électrode (15) desdites électrodes de détection indépendantes a une forme d'arc semi-circulaire entourant une partie de ladite première électrode à une distance d'environ 20 à environ 100 micromètres de ladite première électrode.

10. Capteur selon la revendication 9, caractérisé en ce que ladite première électrode (16) est maintenue à une température supérieure à celle de ladite seconde électrode.

11. Capteur selon l'une quelconque des revendications 6 à 10, caractérisé en ce que chaque dite électrode de détection indépendante a une épaisseur d'environ 500 à 3.000 angstroms, de préférence d'environ 750 à 1.500 angstroms et est choisie dans le groupe constitué du platine, du palladium, du rhodium et de l'iridium.

12. Capteur selon l'une quelconque des revendications 5 à 11, caractérisé en ce que ledit électrolyte a une surface d'environ 200 à environ 1.000 micromètres carrés, de préférence de 400 à environ 800 micromètres carrés, une épaisseur d'environ 0,2 à environ 20 micromètres, de préférence d'environ 0,4 à environ 2,0 micromètres, et est choisi dans le groupe constitué du $ZrO_2$, du $CeO_2$, du $Bi_2O_3$ et d'autres oxydes métalliques dopés par au moins un des oxydes de calcium et d'yttrium.

13. Capteur selon la revendication 6, caractérisé en ce que lesdits moyens de mesure de la température comprennent un voltmètre à impédance élevée (20, 23).

14. Capteur selon l'une quelconque des revendications 6 à 13, caractérisé en ce que ledit électrolyte (114) est fixé sur un côté à un puits de gravure (112) et ledit électrolyte forme une saillie (125) qui s'étend au-dessus dudit puits de gravure.

15. Capteur selon la revendication 14, caractérisé en ce que lesdites électrodes (115, 116), ledit électrolyte (114) et lesdits moyens de chauffage (113) forment de manière générale une structure en V.

16. Capteur selon l'une quelconque des revenications 6 à 13, caractérisé en ce que deux côtés opposés dudit électrolyte sont fixés sur deux côtés opposés d'un puits de gravure.

17. Capteur selon la revendication 16, caractérisé en ce que lesdites électrodes (115, 116), ledit électrolyte (114) et lesdits moyens de chauffage (113) forment de manière générale une structure du cadre en A.

18. Capteur selon l'une quelconque des revendications 6 à 17, caractérisé en ce qu'un film diélectrique (12) est fixé auxdites électrodes (15, 16) pour isoler lesdites électrodes de détection vis-à-vis des moyens de chauffage (13).

19. Capteur selon l'une quelconque des revendications 6 à 18, caractérisé en ce que lesdits moyens de chauffage (13) jouent un double rôle de chauffage lorsque de l'énergie est appliquée auxdits moyens de chauffage et de détection d'une tension représentant un signal de sortie de cellule électrochimique lorsque des signaux sont lus dans lesdits moyens de chauffage.

20. Capteur selon la revendication 9, caractérisé en ce que les moyens de chauffage (13) constituent au moins une partie desdites électrodes (15, 16).

Fig 1

Fig. 2

FIG. 3.

FIG. 4.

Fig. 5

Fig. 6

Fig.7

Fig.8A

Fig 8.B

Fig.8F

Fig.8C

Fig. 8D

Fig. 8E

16

EP 0 480 076 B1

Fig.9

Fig.10

Fig.11

17

EP 0 480 076 B1

12 A

_112_    _119_

114    125

_119_

_112_    _112_

113  115   116 113 113 116   115  113

12 A

Fig. 12

_119_

_112_

125

113
114    115
116
113

125

_119_

Fig. 12 A

18